# EUROPÄISCHE PATENTSCHRIFT

(11) **EP 0 543 049 B1**
(45) Veröffentlichungstag und Bekanntmachung des Hinweises auf die Patenterteilung: **12.10.1994**
(21) Anmeldenummer: 91119918.0
(22) Anmeldetag: 22.11.1991
(51) Int. Cl.: B60N 2/24, B60N 2/42

(54) **Fahrgastsitz**
Passenger seat
Siège de passager

(43) Veröffentlichungstag der Anmeldung: 26.05.1993
(73) Patentinhaber: Ignaz Vogel GmbH & Co KG, Fahrzeugsitze, D-76228 Karlsruhe (DE)
(72) Erfinder: Vogel, Ignaz, W-7500 Karlsruhe 41-Stu. (DE)
(74) Vertreter: Trappenberg, Hans

(56) Entgegenhaltungen:
- DE-A- 3 508 721
- FR-A- 2 101 292
- FR-A- 2 156 938
- FR-A- 2 228 637
- FR-A- 2 375 068
- US-A- 4 215 900

## Beschreibung

Die Erfindung betrifft einen Fahrgastsitz mit einer um eine querliegende an der Tragekonstruktion angebrachten etwa in Höhe des Sitzkissens angeordneten Achse verschwenkbaren Rückenlehne für Reihenbestuhlung, bei der die Fahrgastsitze in Reihe hintereinander im Fahrgastraum angebracht sind, wobei die Rückenlehne einen Rückenlehnen-Rahmen aufweist, der über die Achse hinaus verlängert ist und dort an einem an der Tragekonstruktion angebrachten Endanschlag anschlägt.

Derartige in Personenbeförderungsfahrzeugen angebrachte Fahrgastsitze dienen nicht nur dem Komfort der zu befördernden Fahrgäste, sondern auch deren Sicherheit. Im Falle des Aufpralls eines solchen Fahrzeugs werden die Fahrgäste, die in derartigen Personenbeförderungsfahrzeugen in aller Regel nicht angeschnallt sind, durch ihre Massenträgheit in der vorherigen Fahrtrichtung weggeschleudert, treffen also mit ihrem Oberkörper auf die Rückseite der Rückenlehne des Vordersitzes auf. Um unter Umständen schwere Verletzungen der Fahrgäste bei einem solchen Aufprall zu vermeiden, sollten die Rückenlehnen gleichgültig in welcher Stellung sie sich befinden, durch entsprechende Verformung Energie aufnehmen, wobei allerdings eine gesetzliche Vorschrift ist, daß auch nach einem solchen Aufprall der Überlebensraum zwischen den Fahrgastsitzen nicht zerstört sein darf, das heißt, daß die Fahrgastsitze zumindest behelfsmäßig noch benutzbar sein sollen. Bisher wurden daher derartige Fahrgastsitze, um auf jeden Fall dem erwähnten gesetzlichen Erfordernis Rechnung zu tragen, sehr steif ausgeführt, so daß die Aufprallenergie innerhalb der aufprallenden Körper umgesetzt werden mußte, was verständlicherweise zu schweren äußeren und inneren Verletzungen führte. Die Erfindung zeigt einen Weg auf, wie diese schweren Verletzungen vermieden werden können dadurch, daß die Aufprallenergie zumindest teilweise durch Verformungsarbeit der Rückenlehnenkonstruktion aufgenommen wird. Erreicht wird dies nach der Erfindung unter Einschaltung der gesetzlichen Bestimmung dadurch, daß die Tragkonstruktion ein Winkelblech ist, auf dessen unterer Abwinklung der verlängerte Rückenlehnen-Rahmen in Endstellung aufsitzt und die hochstrebende Abwicklung einen Notanschlag bildet.

Nach wie vor schlägt also die Rückenlehne mit der Verlängerung des Rückenlehnen-Rahmens an einem Endanschlag an, nämlich der unteren Abwinklung des Winkelblechs, jedoch ist noch ein zweiter Anschlag als Notanschlag vorgesehen dann, wenn durch die Aufprallenergie eines aufprallenden Körpers sich die Verlängerung des Rückenlehnen-Rahmens in die Abwinklung des Winkelblechs eingräbt und in Richtung auf diesen Notanschlag gedrückt wird. Das Eingraben der Verlängerung in die Abwinklung des Winkelblechs nimmt stetig zunehmend Aufprallenergie als Verformarbeit auf, so daß zumindest die Energiespitze beim Aufprall vom Körper weggenommen ist, also gerade die hohe Aufprallenergie, die zu den schweren äußeren und inneren Verletzungen führt. Durch das zusätzliche Verschwenken der Rückenlehne nach vorne behält nunmehr jedoch die Rükkenlehne eine solche Stellung, daß, wie vom Gesetzgeber gefordert, der Sitz nach wie vor noch benutzbar beziehungsweise der Überlebensraum noch vorhanden ist, daß damit also das Fahrzeug, soweit es überhaupt noch fahrfähig ist, mit den Fahrgästen aus der Gefahrenzone fahren kann. Zusätzlich kann dann noch, soweit dies gesetzlich zulässig ist, kurz oberhalb der Achse eine Schwachstelle am Rückenlehnen-Rahmen vorgesehen sein, die dann weitere Aufprallenergie aufnimmt, wenn, beispielsweise bei einem bei hoher Geschwindigkeit auftretenden Frontaufprall, die Aufprallenergie der aufprallenden Körper zu hoch und gleichzeitig auch so hoch ist, daß das Fahrzeug nicht mehr fahrfähig ist.

Auf jeden Fall ist bereits durch die einfach durchzuführende und keine konstruktiven Schwierigkeiten bereitende Maßnahme der sich in die Abwinklung des Winkelblechs eingrabenden Verlängerung des Rückenlehnen-Rahmens Vorsorge dafür getragen, daß die hohen Aufprall -Spitzenwerte im ersten Moment des Aufpralls abgebaut und gleichzeitig damit die schweren äußeren und inneren Verletzungen vermieden werden.

Auf der Zeichnung ist ein Ausführungsbeispiel des Erfindungsgegenstandes schematisch dargestellt und zwar zeigen:

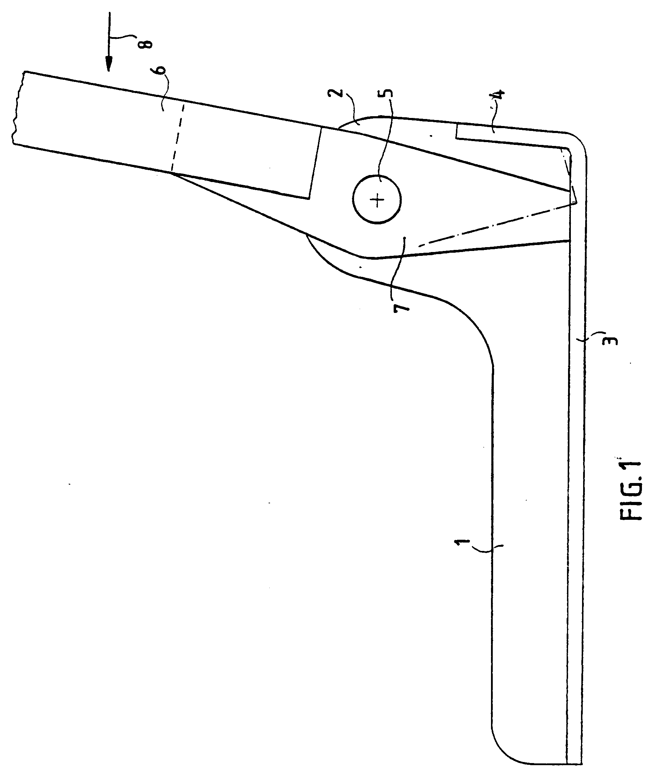

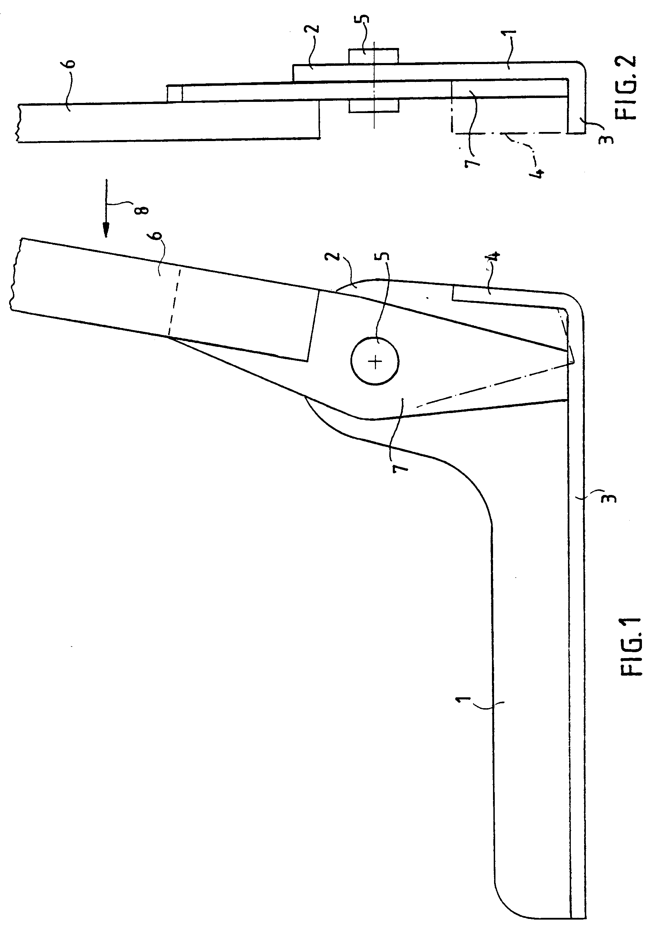

Fig. 1 eine Ansicht und
Fig. 2 eine Seitenansicht der erfindungsgemäßen Konstruktion.

Ein Winkelblech (1) mit einem Lagerbock (2) ist mit einer unteren Abwinklung (3) wie auch mit einer hochstrebenden Abwinklung (4) versehen. Das Winkelblech (1) wird auf der Tragkonstruktion eines Fahrgastsitzes üblicherweise zusammen mit einem Sitzteil (nicht eingezeichnet) befestigt. An dem Winkelblech (1) ist über ein Schwenklager (5) der Rahmen (6) einer Rückenlehne verschwenkbar angebracht. Der Rahmen (6) der Rückenlehne weist eine über das Schwenklager (5) hinausreichende Verlängerung (7) auf, die in der Endlage der Rückenlehne auf der Abwinklung (3) des Winkelblechs (1) aufsitzt. Durch dieses Aufsitzen der Verlängerung (7) auf der Abwinklung (3) des Winkelblechs (1) ist die aufrechte Stellung der Rückenlehne, also die normale Endstellung festgelegt.

Im Falle eines Aufpralls werden die Körper der Fahrgastsitze auf die Rückseite der Rückenlehne geschleudert, wodurch eine in Richtung des Pfeiles (8) wirkende Kraft die Rückenlehne und damit auch den Rückenlehnen-Rahmen (6) belastet. Dadurch wird die Rückenlehne ebenfalls in dieser Richtung verschwenkt, so daß die Verlängerung (7) des Rückenlehnen-Rahmens (6) in Richtung auf den Notanschlag (4) geführt wird, wobei sich die Endfläche der Rückenlehnen-Verlängerung (7), wie strichpunktiert eingezeichnet, in das Material der Abwinklung (3) eingräbt, bis die Hinterkante der Rückenlehnen-Verlängerung (7) an der Abwinklung (4) des Winkelblechs (1) anschlägt. Beim Erreichen dieses Notanschlags weist die Rückenlehne noch eine solche Stellung auf, die durchaus eine Benutzung des Fahrgastsitzes noch zuläßt beziehungsweise den Überlebensraum freiläßt. Ist die Aufprallkraft jedoch zu hoch, kann, wenn gewünscht, oberhalb des Schwenklagers (5) am Rückenlehnen-Rahmen (6), beispielsweise vom Übergang der Verlängerung zum aus Vierkantrohr bestehenden Rahmen (6) eine Schwachstelle eingebaut sein, so daß dort der Rückenlehnen-Rahmen (6) weiter nachgibt, unter Umständen auch so weit, daß der Sitz nicht mehr benutzbar ist. Dieses weitere Nachgeben kann konstruktiv so eingestellt werden, daß es nur dann auftritt, wenn das Fahrzeug durch einen Unfall sowieso nicht mehr fahrfähig ist.

## Patentansprüche

1. Fahrgastsitz mit einer um eine querliegende an der Tragkonstruktion angebrachten etwa in Höhe des Sitzkissens angeordneten Achse (5) verschwenkbaren Rükkenlehne für Reihenbestuhlung, bei der die Fahrgastsitze in Reihe hintereinander im Fahrgastraum angebracht sind, wobei die Rückenlehne einen Rückenlehnen-Rahmen (6) aufweist, der über die Achse (5) hinaus verlängert ist und dort an einen an der Tragkonstruktion angebrachten Endanschlag anschlägt,
dadurch gekennzeichnet,
daß die Tragkonstruktion ein Winkelblech (1) ist, auf dessen unterer Abwinklung (3) der verlängerte Rückenlehnen-Rahmen (6) in Endstellung aufsitzt und die hochstrebende Abwinklung (4) einen Notanschlag bildet.

2. Fahrgastsitz nach Anspruch 1,
dadurch gekennzeichnet,
daß die Verlängerung des Rückenlehnen-Rahmens (6) endständig eine bei der Rückenlehnen-Rahmen-Endstellung mit der Abwinklungsfläche übereinstimmende scharfkantige Stirnfläche aufweist.

3. Fahrgastsitz nach Anspruch 1,
dadurch gekennzeichnet,
daß die hochstrebende Abwinklung (4) beim Notanschlag mit der Hinterkante der Verlängerung (7) übereinstimmt.

4. Fahrgastsitz nach Anspruch 1,
dadurch gekennzeichnet,
daß der Rückenlehnen-Rahmen (6) kurz oberhalb der Achse (Schwenklager (5)) eine Schwachstelle aufweist.

## Claims

1. A passenger seat comprising a backrest pivotable about a transversely disposed axis (5) which is mounted on the support structure and which is arranged approximately at the height of the seat cushion, for seating in a row in which the passenger seats are disposed in a row one behind the other in the passenger compartment, wherein the backrest has a backrest frame (6) which is extended beyond the axis (5) and there bears against a limit stop disposed on the support structure, characterised in that the support structure is an angle plate (1), against the lower angled portion (3) of which the extended backrest frame (6) bears in the limit position and the upstanding angled portion (4) forms an emergency stop.

2. A passenger seat according to claim 1 characterised in that the extension of the backrest frame (6) has at its end a sharp-edged end face which in the limit position of the backrest frame coincides with the surface of the angled portion.

3. A passenger seat according to claim 1 characterised in that in regard to the emergency stop the upstanding angled portion (4) coincides with the rear edge of the extension (7).

4. A passenger seat according to claim 1 characterised in that the backrest frame (6) has a weak location just above the axis (pivot mounting (5)).

## Revendications

1. Siège de passager comportant un dossier qui peut pivoter autour d'un axe (5) transversal fixé au support et qui est disposé approximativement au niveau du coussin d'assise, pour une disposition en rangées selon laquelle les sièges de passagers sont fixés les uns derrière les autres dans l'espace passagers, sachant que le dossier présente un cadre (6) de dossier qui se prolonge au-delà de l'axe (5) et qui vient en butée contre une butée de fin de course fixée au support, caractérisé en ce que le support est une cornière (1) sur la branche inférieure (3) de laquelle repose le cadre (6) du dossier prolongé lorsqu'il est position finale et en ce que la branche supérieure (4) forme une butée de secours.

2. Siège de passager selon la revendication 1, caractérisé en ce que le prolongement du cadre (6) du dossier présente, en position finale, une surface frontale à arêtes vives coïncidant avec la surface de la branche de la cornière lorsque le cadre du dossier est en position finale.

3. Siège de passager selon la revendication 1, caractérisé en ce que la branche verticale (4) coïncide à proximité de la butée de secours avec l'arête arrière du prolongement (7).

4. Siège de passager selon la revendication 1, caractérisé en ce que le cadre (6) du dossier présente un point faible légèrement au-dessus de l'axe (palier oscillant (5)).
